# EUROPÄISCHE PATENTSCHRIFT

(11) **EP 1 159 172 B1**
(45) Veröffentlichungstag und Bekanntmachung des Hinweises auf die Patenterteilung: **11.05.2005**
(21) Anmeldenummer: 00916913.7
(22) Anmeldetag: 09.03.2000
(51) Int. Cl.: B60T 1/087, F16D 67/00, F16H 47/08

(54) **ANFAHREINHEIT**
STARTING UNIT
UNITE DE DEMARRAGE

(30) Priorität: 12.03.1999 DE 29904558 U; 15.03.1999 DE 19911346; 15.03.1999 DE 19911239
(43) Veröffentlichungstag der Anmeldung: 05.12.2001
(73) Patentinhaber: Voith Turbo GmbH & Co. KG, 89522 Heidenheim (DE)
(72) Erfinder: KLEMENT, Werner, D-89520 Heidenheim (DE); VOGELSANG, Klaus, D-74564 Crailsheim (DE); EDELMANN, Peter, D-89522 Heidenheim (DE); HÖLLER, Heinz, D-74564 Crailsheim (DE); FRIEDRICH, Jürgen, D-74564 Crailsheim (DE)
(74) Vertreter: Dr. Weitzel & Partner
(86) Internationale Anmeldenummer: PCT/EP2000/002052
(87) Internationale Veröffentlichungsnummer: WO 2000/055020

(56) Entgegenhaltungen:
- DE-A- 3 730 339
- DE-A- 4 122 628
- DE-A- 19 650 339

## Beschreibung

Die Erfindung betrifft eine Anfahreinheit für den Einsatz in Schaltgetrieben, insbesondere automatisierten Schaltgetrieben, Antriebssystemen, insbesondere für den Einsatz in Fahrzeugen, im einzelnen mit den Merkmalen aus dem Oberbegriff des Anspruchs 1; femer ein automatisiertes Schaltgetriebe.

Getriebe für den Einsatz in Nutzkraftwagen, insbesondere in Form von Schaltgetrieben oder automatisierten Schaltgetrieben sind in einer Vielzahl von Ausführungen bekannt. Diesen gemeinsam ist in der Regel, dass der Anfahrvorgang über eine Kupplungseinrichtung in Form einer Reibkupplung oder eines hydrodynamischen Wandlers realisiert wird. Problematisch gestaltet sich die Verwendung einer Reibungskupplung als Anfahrelement jedoch in den Funktionszuständen, welche durch einen erhöhten Schlupf über einen längeren Zeitraum gekennzeichnet sind. Dies gilt insbesondere für den Anfahrvorgang. Aufgrund der enormen mechanischen und thermischen Beanspruchung ist die Kupplungseinrichtung dann einem erhöhten Verschleiß unterworfen. Um diesen möglichst gering zu halten, sind entsprechende Anforderungen an den zu verwendenden Reibbelag zu stellen. Des weiteren bedingen die Verschleißerscheinungen geringere Standzeiten für das Anfahrelement. Der Nachteil von Lösungen mit Anfahrelementen in Form von hydrodynamischen Wandlern besteht im wesentlichen in den hohen Kosten für den hydrodynamischen Teil, einem hohen steuerungstechnischen Aufwand sowie der erforderlichen Überdimensionierung des mechanischen Getriebeteiles.

Eine Ausführung einer Getriebebaueinheit mit einem Anfahrelement in Form einer Turbokupplung ist aus der Druckschrift DE 196 50 339 A1 bekannt. Mit dieser werden mindestens zwei Betriebszustände - ein erster Betriebszustand zur Leistungsübertragung in wenigstens zwei Gangschaltstufen und ein zweiter Betriebszustand zur Abbremsung realisiert. Dabei werden beide Funktionen über die Turbokupplung realisiert. Diese umfasst ein Pumpenrad und ein Turbinenrad, die miteinander einen torusförmigen Arbeitsraum bilden. Die Realisierung der Funktion eines hydrodynamischen Retarders erfolgt durch Zuordnung der Funktion des Statorschaufelrades, entweder durch Festsetzung gegenüber den ruhenden Getriebeteilen zum Pumpenrad und der Funktion des Rotorschaufelrades zum Turbinenrad oder der Zuordnung der Funktion des Statorschaufelrades zum Turbinenschaufelrad durch Festsetzen des Schaufelrades gegenüber den ruhenden Getriebeteilen und der Funktion des Rotorschaufelrades zum Pumpenrad. Das die Funktion des Rotorschaufelrades übernehmende Schaufelrad ist in beiden Fällen mit der Getriebeausgangswelle über den mechanischen Getriebeteil gekoppelt. Die Anbindung der Turbokupplung an die Antriebswelle bzw. den mechanischen Getriebeteil der Getriebebaueinheit erfolgt dabei derart, dass zur Realisierung des ersten Betriebszustandes das Turbinenrad mit dem mechanischen Getriebeteil und das Pumpenrad mit der Getriebeeingangswelle verbindbar ist, während zur Realisierung der zweiten Betriebsweise, d.h. Abbremsung, eines der beiden Schaufelräder festgesetzt wird. Zu diesem Zweck sind der Turbokupplung, insbesondere einem Schaufelrad der Turbokupplung Mittel zur Festsetzung und Entkopplung vom Antriebsstrang zugeordnet. Diese Ausführung erlaubt zwar die Gestaltung einer besonders kompakten Getriebebaueinheit. Ein wesentlicher Nachteil besteht jedoch darin, dass die Realisierung der beiden Funktionsweisen eine entsprechend modifizierte Ausgestaltung bzw. Auslegung der Anschlusselemente bedingt und des weiteren, dass beide Funktionen nur wechselweise genutzt werden können, d.h. dass während des Betriebszustandes der Leistungsübertragung über die hydrodynamische Kupplung keine Erzeugung eines Bremsmomentes mittels einer Dauerbremseinrichtung, insbesondere einem hydrodynamischen Retarder möglich ist. Des weiteren ist aufgrund der speziellen Form der Anbindung keine Schaffung eines standardisierten Anfahrelementes möglich, welches auch frei austauschbar in bereits vorhandene Getriebebaueinheiten einsetzbar wäre.

Die DE 41 22 628 A offenbart eine Anfahreinheit gemäß dem Oberbegriff des Anspruchs 1.

Der Erfindung liegt daher die Aufgabe zugrunde, eine Anfahreinheit für den Einsatz in Schaltgetriebebaueinheiten, insbesondere automatisierten Schaltgetrieben in Antriebssystemen von Fahrzeugen, Nutzkraftwagen derart weiterzuentwickeln, dass die oben genannten Nachteile vermieden werden. Im einzelnen ist dabei auf die Realisierung eines möglichst verschließfreien Anfahrvorganges unabhängig von der Zeitdauer des Zustandes erhöhten Schlupfes abzustellen. Die Anfahreinheit selbst sollte dabei durch einen geringen konstruktiven und steuerungstechnischen Aufwand charakterisierbar und leicht in das Antriebssystem beziehungsweise in eine Kraftübertragungseinheit, beispielsweise in Form einer Getriebebaueinheit integrierbar sein, wobei den zunehmend erhöhten Anforderungen an die geringe Baulänge Rechnung getragen werden sollte.

Unter einem weiteren Aspekt der Erfindung sollen die Vorteile einer multifunktionalen Komponente beibehalten werden, wobei diese jedoch in einfacher Art und Weise auch in bereits vorhandene Schaltgetriebebaueinheiten, insbesondere automatisierte Schaltgetriebe einfügbar sein muß.

Die erfindungsgemäße Lösung ist durch die Merkmale des Anspruchs 1 charakterisiert. Vorteilhafte Ausgestaltungen sind in den Unteransprüchen wiedergegeben.

Die Anfahreinheit umfasst ein Anfahrelement in Form einer Turbokupplung mit wenigstens einem Pumpenrad und einem Turbinenrad, die miteinander wenigstens einen torusförmigen Arbeitsraum bilden, und eine Überbrückungskupplung, wobei die Turbokupplung und die Überbrückungskupplung parallel geschaltet, aber nie gemeinsam in Einsatz bzw. Eingriff sind. Die Abtriebsseiten der Turbokupplung und der Überbrückungskupplung sind miteinander drehfest verbunden. Des weiteren ist wenigstens eine zum Anfahrelement bzw. bezogen auf die Funktionsweise des Anfahrelementes separate Bremseinrichtung vorgesehen, welche zur Realisierung einer besonders verschleißarmen Betriebweise vorzugsweise in Form eines hydrodynamischen Retarders ausgeführt ist, und welche dem Anfahrelement zugeordnet ist. Die Bremseinrichtung ist dabei erfindungsgemäß drehfest mit der Antriebsseite des Anfahrelementes, d.h. dem Pumpenrad gekoppelt. In diesem Fall funktioniert die Bremseinrichtung motordrehzahlabhängig, d.h. abhängig von der an der Getriebeeingangswelle vorliegenden Drehzahl. Diese Übersetzung ermöglicht es, dass besonders beim Fahren in den unteren Geschwindigkeitsbereichen bzw. in den niederen Gängen eine optimale Bremsung erzielt wird. Der Vorteil einer derartigen Anordnung besteht des weiteren darin, dass zum einen im wesentlichen jeweils nur zwei Zustände bezüglich der Leistungsübertragung vom Antrieb zum Abtrieb unterschieden werden können, wobei die Leistungsübertragung entweder rein mechanisch über die Überbrückungskupplung oder über das hydrodynamische Bauelement, die Turbokupplung erfolgt, und zum anderen durch die Zuordnung der Bremseinrichtung die Bildung einer multifunktionalen vormontierbaren und platzsparenden Baueinheit möglich wird, welche auf einfache Art und Weise in ein Antriebssystem integrierbar ist und die bei bevorzugter Ausbildung der Bremseinrichtung als hydrodynamischer Retarder sich durch eine besonders verschleißarme Betriebsweise im Dauerbetrieb und die theoretische Möglichkeit der Nutzung eines gemeinsamen Betriebsmittelversorgungssystems auszeichnet. Andere Ausführungen der Bremseinrichtungen sind ebenfalls denkbar, beispielsweise elektrisch oder mechanisch, bieten jedoch nicht die Vorteile der hydrodynamischen Leistungsübertragung. Des weiteren ist durch die geeignete Ansteuerung der Turbokupplung die Ausnutzung der Vorteile der Leistungsübertragung mittels hydrodynamischer Komponenten für bestimmte Fahrzustände, insbesondere für den Anfahrzustand möglich. Dieser kann vollständig verschleißfrei erfolgen, wobei in allen anderen Fahrzuständen eine vollständige Überbrückung der schlupfbehafteten Turbokupplung realisiert wird. Ab einem bestimmten Schlupfzustand, welcher abhängig von der Auslegung der Turbokupplung ist, erfolgt die Überbrückung durch eine Kopplung zwischen Pumpen- und Turbinenrad mittels der mechanischen Überbrückungskupplung. Die Antriebsleistung von einer mit dem Anfahrelement koppelbaren Antriebsmaschine wird dann mit nur geringen Verlusten, bedingt durch die mechanischen Übertragungssysteme, auf den Abtrieb übertragen. Da für den Einsatz in automatisierten Schaltgetrieben beim Wechsel zwischen zwei Gangstufen die Verbindung zwischen der Antriebsmaschine und dem Abtrieb zur Realisierung einer optimalen Funktionsweise getrennt werden muss, kann diese Aufgabe, in allen Betriebszuständen der Überbrückungskupplung zugeordnet werden.

Unter einem weiteren Aspekt der Erfindung handelt es sich bei der Überbrückungskupplung um eine mechanische Kupplung in Scheibenbauweise, die als nasse Lamellenkupplung ausgeführt ist. Das Nasslaufen kann auf einfache Weise dadurch realisiert werden, dass das sich außerhalb des Arbeitsraumes der Turbokupplung befindliche Betriebsmittel gleichzeitig als Schmiermittel für die Überbrückungskupplung genutzt wird. Es handelt sich dabei in der Regel um im Betriebsmittelsumpf des Kupplungsgehäuses oder an einer Kupplungsschale oder Speicherkammer angesammeltes Betriebsmittel. In diesem Fall sind keine zusätzlichen Abdichtmaßnahmen zwischen Turbokupplung und Überbrückungskupplung erforderlich. Die Überbrückungskupplung ist in einfacher Weise im Kupplungsgehäuse der Turbokupplung integriert und es kann eine einzige Betriebsmittelversorgungsquelle für zwei unterschiedliche Funktionen, nämlich die Funktion der hydrodynamischen Kupplung als Anfahrelement und die Schmierung der Überbrückungskupplung sowie evt. zusätzlich als Betriebsmittel für den hydrodynamischen Retarder verwendet werden. Damit wird eine hinsichtlich Aufbau und Funktionalität besonders kompakte Bauform eines verschleißfreien Anfahrelementes realisiert, welche sich durch die optimale Ausnutzung der den einzelnen Komponenten zugeordneten Einrichtungen zur Betriebsmittelversorgung, Kühlung und Steuerung auszeichnet.

Die Anbindung der Bremseinrichtung an das Anfahrelement erfolgt erfindungsgemäß an die Antriebsseite beziehungsweise den Eingang des Anfahrelementes bei Kraftübertragung im Traktionsbetrieb betrachtet von der Antriebsmaschine zum Abtrieb.

Dabei sind wenigstens die nachfolgenden zwei Möglichkeiten der Anbindung denkbar:
a) Koppelung der Bremseinrichtung mit dem Pumpenrad der Turbokupplung;
b) Koppelung der Bremseinrichtung mit der Antriebsseite bzw. dem Eingang, beispielsweise der Antriebswelle des Anfahrelementes, welche wenigstens mittelbar mit einer Antriebsmaschine beim Einsatz in Antriebssystemen für Fahrzeuge koppelbar ist.

Die Möglichkeit a) bietet den Vorteil, dass bei der Ausführung der Bremseinrichtung in Form eines hydrodynamischen Retarders der Rotor des hydrodynamischen Retarders mit dem Pumpenrad der Turbokupplung drehfest verbindbar ist, wobei der Rotor des hydrodynamischen Retarders und das Pumpenrad der Turbokupplung entweder auf einer gemeinsamen Welle angeordnet sind, oder aber der Rotor und das Pumpenrad von einem Bauelement gebildet werden.

Die erfindungsgemäß gestaltete Anfahreinheit baut sehr klein und übt somit bei Integration in einer Getriebebaueinheit nur geringen Einfluß auf die Baulänge aus. Die Einheit aus Turbokupplung, Überbrückungskupplung und Retarder kann als modulare Baueinheit vormontiert und im Handel angeboten bzw. geliefert werden. Die Integration in einer Getriebebaueinheit erfolgt dann kraftschlüssig und/oder formschlüssig, beispielsweise durch Aufstecken der modularen Baueinheit auf die Getriebeeingangswelle oder die Realisierung einer Welle-Nabe-Verbindung zwischen dem Abtrieb des Anfahrelementes und dem Eingang der Getriebebaueinheit, wobei zusätzlich eine Kopplung über eine mechanische Verbindung mit dem Gehäuse der Getriebebaueinheit und/oder der Antriebsmaschine erfolgen kann. Unter einem weiteren Aspekt der Erfindung können die Anschlußelemente des Anfahrelementes - Antrieb und Abtrieb bzw. mit diesen gekoppelte Leistungsübertragungselemente - für eine Mehrzahl unterschiedlich ausgelegter Anfahrelemente standardisiert ausgeführt werden, was zu einer Verringerung der Fertigungskosten führt und in Kombination mit einer Getriebebaueinheit zur Anpassung an verschiedene Einsatzfälle eine leichte Austauschbarkeit der Anfahrelemente ermöglicht.

Bei der Ausführung als Turbokupplung handelt es sich um Strömungskupplungen, welche nach dem Föttinger-Prinzip arbeiten. Diese können geregelt oder ungeregelt sein. Geregelte Turbokupplungen sind Kupplungen, bei denen der Füllungsgrad während des Betriebes beliebig zwischen voller Füllung und Entleerung verändert werden kann, wodurch die Leistungsaufnahme und damit die Übertragungsfähigkeit der Kupplung einstellbar wird und beim Einsatz in Fahrzeugen eine stufenlose (lastabhängige) Drehzahlregelung der Antriebsmaschine ermöglicht. Die Turbokupplungen können dabei als Kupplungen mit einem torusförmigen Arbeitsraum zwischen Primärschaufelrad und Sekundärschaufelrad oder sogenannte Doppelkupplungen, das heißt mit zwei, vom Primärschaufelrad und Sekundärschaufelrad gebildeten torusförmigen Arbeitsräumen ausgebildet sein. Die Regelbarkeit wird im gleichen Maße wie bei einem hydrodynamischen Retarder über die Beeinflussung des Füllungsgrades des Arbeitsraumes beziehungsweise des Betriebsmittelumlaufes im Arbeitskreislauf realisiert. Da beide Systeme - hydrodynamischer Retarder und Turbokupplung - als Strömungsmaschine ausgeführt sind, können diese ein gemeinsam nutzbares Betriebsmittelversorgungssystem aufweisen.
Beim Betriebsmittelversorgungssystem handelt es sich in der Regel um den Ölhaushalt. Ausführungen mit Wasser o.ä. sind ebenfalls denkbar.
Das Betriebsmittelversorgungssystem kann dabei bauteilmäßig einem der beiden Elemente - Retarder oder Turbokupplung - zugeordnet sein. Als Grundelemente des Betriebsmittelversorgungssystems, welchem die Steuervorrichtung zugeordnet ist, werden dann wenigstens die folgenden Komponenten angesehen:
a) Mittel zur Förderung des Betriebsmittels, beispielsweise Pumpeneinrichtungen oder über Luftdruck;
b) Mittel zur Beeinflussung des Betriebsmittelumlaufes, beispielsweise in Form eines hydraulischen Steuerblockes.

Zusätzlich werden Mittel zur Abfuhr von Wärme, beispielsweise in Form von Kühleinrichtungen oder von Wärmeaustauschern, Druckspeicher oder andere Komponenten vorgesehen. Als Pumpeinrichtung findet in der Regel eine Zahnradpumpe Verwendung, welche beispielsweise elektrisch und mechanisch angetrieben wird. Das Betriebsmittelversorgungssystem selbst kann als
a) offener Kreislauf oder
b) geschlossener Kreislauf oder
c) Koppelung zweier Kreisläufe, welche jeweils separat der Turbokupplung und dem Retarder zugeordnet sind, ausgeführt sein.

Im Fall b) sind jedoch Mittel vorzusehen, welche eine Verschiebung von Betriebsmittel aus dem oder den Arbeitsräumen und eine Zwischenspeicherung in Speicherräumen, die in den hydrodynamischen Bauelementen integriert sein können, erlauben.

Im Fall c) werden die einzelnen Kreisläufe miteinander gekoppelt, wobei die oben genannten Grundelemente vorzugsweise in der Kopplung integriert sind.

Unter einem weiteren Aspekt der Erfindung ist der Überbrückungskupplung, der Turbokupplung und dem hydrodynamischen Retarder ein gemeinsames Betriebsmittelversorgungssystem, das heißt ein gemeinsamer Ölhaushalt zugeordnet. Der gemeinsame Ölhaushalt ist dabei vorzugsweise autark, das heißt, dieser ist lediglich der Anfahreinheit zugeordnet und unabhängig von anderen Ölhaushalten bei Integration der Anfahreinheit in einem Antriebssystem. Vorzugsweise wird bei Nutzung eines gemeinsamen Ölhaushaltes auch die Einrichtung zur Kühlung gemeinsam von den einzelnen Elementen genutzt. Der Vorteil eines gemeinsamen Betriebsmittelversorgungsund/oder führungssystem und/oder einer gemeinsam nutzbaren Kühleinrichtung für das Betriebsmedium besteht in einer Verringerung des konstruktiven Aufwandes für die zur Realisierung der Funktionsweise der hydrodynamischen Elemente und der Überbrückungskupplung erforderlichen Leitungssysteme. Insbesondere kann eine optimale Auslegung der Systeme erfolgen, wenn die Betriebszustände, welche durch die Inbetriebnahme der Turbokupplung gekennzeichnet sind, von einer Betätigung des hydrodynamischen Retarders frei sind. Der hydrodynamische Retarder nutzt dabei quasi das Betriebsmittelversorgungssystem und/oder die Kühleinrichtung beziehungsweise das Kühlsystem immer nur in den Funktionszuständen, in welchen die Turbokupplung nicht betätigt ist, während die Turbokupplung das Betriebsmittelversorgungs- beziehungsweise führungssystem und/oder die Kühleinrichtung beziehungsweise das Kühlsystem in den Funktionszuständen ausnutzt, in welchen der Retarder nicht betätigt ist. Die Auslegung des Betriebsmittelversorgungssystems und/oder der Kühleinrichtungen beziehungsweise des Kühlsystems erfolgt dabei entsprechend der höher belasteten Komponente, wobei eine optimale Ausnutzung durch die wechselseitige Nutzung durch Turbokupplung und hydrodynamischen Retarder gewährleistet wird.

Vorzugsweise ist dem hydrodynamischen Retarder und der Turbokupplung eine gemeinsame Steuervorrichtung zur wenigstens mittelbaren Beeinflussung der übertragbaren Leistung zugeordnet, welche wechselweise von den einzelnen Elementen - Retarder oder Turbokupplung -, beispielsweise durch Umschaltung, genutzt werden kann. Dies bietet den Vorteil, dass aufgrund der Nutzung der bereits ohnehin vorhandenen und erforderlichen Steuerbeziehungsweise Regelelemente des hydrodynamischen Retarders und/oder der Turbokupplung ein verschleißfrei arbeitendes, geregeltes Anfahrelement - und Bremselement mit geringen Kosten und Bauraumbedarf zur Integration in einem Antriebssystem erzeugbar ist. Das Prinzip der hydraulischen Wechselsteuerung basiert dabei auf dem Grundgedanken, dass für Primärretarder, das heißt hydrodynamische Strömungsmaschinen, welche in Kraftflußrichtung im Traktionsbetrieb hinter der Verbrennungskraftmaschine angeordnet sind, und Anfahrelement zu keiner Zeit die Notwendigkeit einer gleichzeitigen Betätigung besteht, so dass in dem Zeitraum der Nichtnutzung von Retarder oder Anfahrelement die Steuervorrichtung für das jeweilige andere Element - Turbokupplung oder Retarder - zur Verfügung steht.

Eine andere Möglichkeit besteht darin, das Betriebsmittelversorgungssystem der Anfahreinheit bei Ausführung als Ölhaushalt mit dem Ölhaushalt der Anschlußelemente zu kombinieren. Als Anschlußelemente kommen dabei vor allem die Antriebsmaschine, welche in der Regel in Form einer Verbrennungskraftmaschine ausgeführt sein wird, und/oder eine Getriebebaueinheit in Betracht. In diesem Fall können dabei auch die, den einzelnen Kreisläufen von Antriebsmaschine und/oder Getriebebaueinheit zugeordneten Kühleinrichtungen und/oder Steuereinrichtungen gemeinsam von Anfahreinheit und Anschlußelementen genutzt werden.

Bezüglich der räumlichen Anordnung des hydrodynamischen Retarders gegenüber den anderen Komponenten der Anfahreinheit bestehen die nachfolgend genannten Möglichkeiten:
a) Anordnung in Einbaulage im Antriebssystem in Kraftflußrichtung vom Antrieb zum Abtrieb betrachtet vor der Turbokupplung;
b) Anordnung in Einbaulage im Antriebssystem in Kraftflußrichtung vom Antrieb zum Abtrieb betrachtet zwischen der Überbrückungskupplung und der Turbokupplung;
c) Anordnung in Einbaulage im Antriebssystem in Kraftflußrichtung vom Antrieb zum Abtrieb betrachtet hinter der Turbokupplung.

In jedem der genannten Fälle erfolgt jedoch die Anordnung der Bremseinrichtung, insbesondere des hydrodynamischen Retarders in räumlicher Nähe zur Turbokupplung beziehungsweise Überbrückungskupplung. Die Bremseinrichtung kann in der modularen Einheit aus Turbokupplung und Überbrückungskupplung integriert werden. Dies bietet den Vorteil, dass zum einen eine vormontierbare und selbständig handelbare multifunktionale Anfahr- und Bremseinheit zur Integration in Antriebssträngen, insbesondere für Getriebebaueinheiten geschaffen wird und aufgrund der möglichen Verwendung gleicher Betriebsmittel den Systemen ein gemeinsames Betriebsmittelversorgungs- und/oder -führungssystem zugeordnet werden kann, wobei gleichzeitig die Kühleinrichtungen und/oder Steuereinrichtungen gemeinsam nutzbar sind. Diese Einheiten können ebenfalls zusätzlich in der modularen Einheit integriert sein. Die gemeinsame Nutzung von Kühleinrichtungen und/oder Steuereinrichtungen ist jedoch nicht an die gemeinsame Nutzung eines Betriebsmittelversorgungs- und/oder führungssystems gebunden. Jeder Komponente kann dabei auch ein eigenes System, d.h. ein eigener Kreislauf zugeordnet sein.

Für die Realisierung der drehfesten Verbindung zwischen den Abtriebsseiten von Turbokupplung und Überbrückungskupplung bestehen eine Vielzahl von Möglichkeiten. Diese kann lösbar oder unlösbar bezüglich der Montage erfolgen. Die Verbindung selbst kann im erstgenannten Fall form- und/oder kraftschlüssig erfolgen. Im zweiten Fall wird eine drehfeste Verbindung entweder durch Stoffschluß oder durch Ausführung als integrale Baueinheit vom Turbinenrad der Turbokupplung und Abtrieb der Überbrückungskupplung - bei Ausführung als mechanische Kupplung in Lamellenbauweise in Form der Kupplungsausgangsscheibe der Überbrückungskupplung - realisiert. Die Auswahl der konkreten Verbindungsart erfolgt dabei in Abhängigkeit von der vorzunehmenden Auslegung der Turbokupplung und/oder der Überbrückungskupplung und den konkreten Erfordernissen des Einsatzfalles.

Unter einem weiteren Aspekt der Erfindung erfolgt die Integration der einzelnen Komponenten Turbokupplung, Überbrückungskupplung und Retarder in einem gemeinsamen Gehäuse, wobei die Überbrückungskupplung im Betriebsmittel der Turbokupplung umläuft. Das gemeinsam genutzte Gehäuse kann dabei entweder vom Gehäuse der Turbokupplung, dem Retarder, einem separaten Gehäuse oder den Anschlußelementen - beispielsweise dem Gehäuse der Antriebsmaschine und/oder dem Gehäuse des Getriebes bei Integration in einem Antriebssystem für ein Fahrzeug - gebildet werden. Denkbar ist in diesem Fall beispielsweise die Ausbildung des Gehäuses entweder allein von der mit dem Anfahrelement koppelbaren Antriebsmaschine und/oder der mit dem Anfahrelement koppelbaren Getriebebaueinheit oder von beiden anschließenden Komponenten.

Unter einem weiteren Aspekt der Erfindung befinden sich die Überbrückungskupplung, die Turbokupplung und der Retarder in einer öldichten Kammer zur Aufnahme der erforderlichen Ölmenge. Die öldichte Kammer ist in zwei Teilräume unterteilt, die mit unterschiedlichem Druckniveau beaufschlagbar sind, aber miteinander leitend verbindbar sind. Die Befüllung des Retarders wird dann durch Druckausübung beispielsweise auf den Ölspiegel der einen Teilkammer realisiert. Das unterschiedliche Druckniveau wird beispielsweise bei einer Druckluftanlage, beispielsweise einem Druckspeicher oder das Druckluftnetz des Fahrzeuges bei Integration in einem Antriebssystem erzeugt. Eine andere Möglichkeit besteht darin, die Druckunterschiede durch die Anordnung der Speicherkammer gegenüber dem Arbeitsraum zu realisieren.

Unter einem weiteren Aspekt der Erfindung erfolgt die rasche Befüllung der einzelnen hydrodynamischen Komponenten - Retarder oder Turbokupplung - mittels einer von beiden gemeinsam nutzbaren Betriebsmittelversorgungseinrichtung, beispielsweise in Form einer Pumpeinrichtung.

Die erfindungsgemäß gestaltete Anfahreinheit kann bauteilmäßig der Getriebebaueinheit oder der Antriebsmaschine zugeordnet sein, bzw. mit diesen eine bauliche Einheit bilden oder in letztere integriert sein.

Vorzugsweise findet die erfindungsgemäß gestaltete Anfahreinheit in automatisierten Schaltgetrieben Verwendung. Der Einsatz einer Turbokupplung anstelle einer mechanischen Reibkupplung bietet dabei den Vorteil, dass aufgrund der Entleerung der Kupplung nur geringfügig höhere Trägheitsmomente gegenüber einer Ausführung mit mechanischen Reibkupplung zu verzeichnen sind und damit die Synchroneinrichtuingrn eines normalen Schaltgetriebes einsetzbar sind, d.h. keine Änderung im Getriebe bzw. mechanischen Getriebeteil erforderlich sind. Insbesondere besteht die Möglichkeit, dass die Turbokupplung im Dauerbetrieb im Schlupfzustand arbeiten kann. Dabei besteht die Möglichkeit, dass mit der Turbokupplung ohne Verschleiß in jedem Gang angefahren kann, denn die Reibungskupplung benötigt zur Minimierung der Reibleistung möglichst große Übersetzungen. Insbesondere beim Halten am Berg und beim Anfahren am Berg gestaltet sich der Komfort beim Einsatz einer Turbokupplung besser.

Die erfindungsgemäße Lösung wird nachfolgend anhand von Figuren erläutert. Darin ist im einzelnen folgendes dargestellt:
- Figur 1: verdeutlicht schematisch eine Ausführungsform der erfindungsgemäßen Lösung mit einer Anbindung des hydrodynamischen Retarders an den Antrieb des Anfahrelementes und Anordnung einer Einrichtung zur Schwingungsdämpfung zwischen Überbrückungskupplung und Turbokupplung;
- Figur 2: verdeutlicht eine Ausführung gemäß Figur 1 mit einer weiteren Anordnungsmöglichkeit einer Einrichtung zur Schwingungsdämpfung und einer Anbindungsmöglichkeit des hydrodynamischen Retarders;
- Figuren 3a und 3b: verdeutlichen in schematisch vereinfachter Darstellung die Möglichkeit der Nutzung eines gemeinsamen Betriebsmittelversorgungssystems von kombinierter Anfahr-Bremseinheit mit der Antriebsmaschine und dem Getriebe.

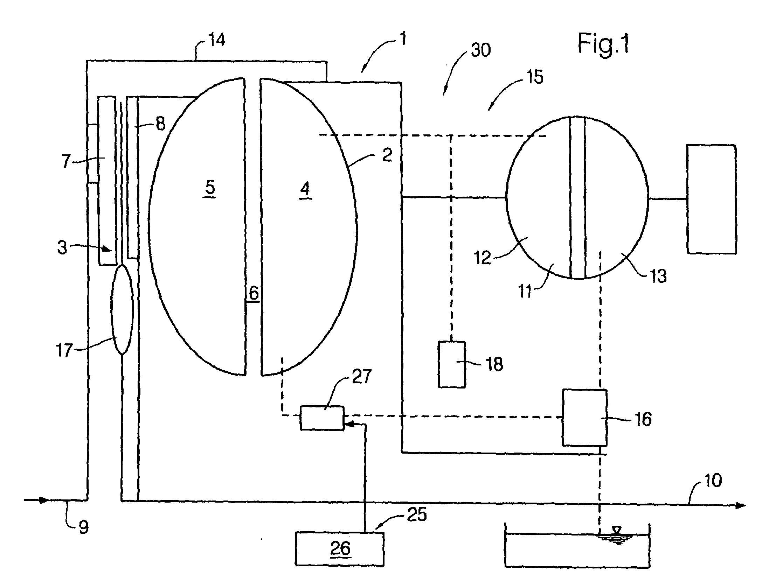

Figur 1 verdeutlich in schematisch vereinfachter Darstellung eine Ausgestaltung einer erfindungsgemäß gestalteten Anfahreinheit 30 mit einem Anfahrelement 1. Dieses umfasst wenigstens eine Turbokupplung 2 und eine Überbrückungskupplung 3. Die Turbokupplung 2 und die Überbrückungskupplung 3 sind parallel geschaltet. Die Turbokupplung 2 umfasst wenigstens ein als Pumpenrad fungierendes Primärrad und ein als Turbinenrad 5 fungierendes Sekundärrad, weiche miteinander einen torusförmigen Arbeitsraum 6 bilden. Die Überbrückungskupplung 3 ist als Scheibenkupplung ausgeführt, vorzugsweise in Form einer Lamellenkupplung. Diese umfasst wenigstens eine Kupplungseingangsscheibe 7 und eine Kupplungsausgangsscheibe 8, welche wenigstens mittelbar reibschlüssig miteinander in Wirkverbindung bringbar sind. Die Anfahreinheit 30 umfasst des weiteren einen, mit einer hier nicht dargestellten Antriebsmaschine wenigstens mittelbar koppelbaren Antrieb 9 und einen mit dem Abtrieb des Antriebssystems wenigstens mittelbar koppelbaren Abtrieb 10. Antrieb 9 und Abtrieb 10 sind in der Regel in Form von Voll- oder Hohlwellen ausgeführt. Erfindungsgemäß sind die Abtriebsseite der Turbokupplung 2 und der Überbrückungskupplung 3 miteinander drehfest verbunden. Als Abtriebseite der Turbokupplung 2 fungiert dabei das Turbinenrad 5 und als Antriebseite der Überbrückungskupplung 3 die Kupplungseingangsscheibe 7. Der Leistungsfluß über das Anfahrelement 1 erfolgt beim Einsatz in Fahrzeugen im Traktionsbetrieb betrachtet, das heißt bei Leistungsübertragung von einer Antriebsmaschine auf die anzutreibenden Räder entweder über die Turbokupplung 2 oder die Überbrückungskupplung 3. Der Abtrieb der Turbokupplung 2, das heißt das Turbinenrad und der Abtrieb der Überbrückungskupplung 3, das heißt die Kupplungsausgangsscheibe 8, sind zu diesem Zweck wenigstens mittelbar mit dem Abtrieb 10 der Anfahreinheit 30 drehfest verbunden, welcher bei Integration der Anfahreinheit 30 in einer Getriebebaueinheit gleichzeitig als Antrieb beziehungsweise Eingang der nachgeordneten Drehzahl-/Drehmomentenwandlungseinrichtungen, beispielsweise in Form von Planetenradsätzen und/oder Stimradsätzen, fungiert.

Die räumliche Anordnung der Überbrückungskupplung 3 gegenüber der Turbokupplung 2 erfolgt bei Integration der Anfahreinheit 30 in einem Antriebsstrang in Einbaulage in Kraftflußrichtung betrachtet räumlich vor der Turbokupplung 2.

Die Überbrückungskupplung 3 ist im Anfahrzustand nicht betätigt. Die Turbokupplung 2 übemimmt dabei die im wesentlichen verschleißfreie Übertragung des Momentes der mit dem Anfahrelement 1 gekoppelten Antriebsmaschine. In Abhängigkeit von der Auslegung der Turbokupplung 2 erfolgt ab Erreichen eines bestimmten Schlupfzustandes deren Überbrückung durch eine Kopplung von Pumpenrad 4 und Turbinenrad 5 mittels der Überbrückungskupplung 3. Die Vorzüge hydrodynamischer Leistungsübertragung werden dadurch im Bereich hoher Drehzahldifferenzen, das heißt im Anfahrbereich voll ausgenutzt, während in allen anderen Fahrzuständen, in denen sich eine hydrodynamische Leistungsübertragung negativ auf den Gesamtwirkungsgrad auswirken würde, der hydrodynamische Teil aus dem Leistungsfluß herausgenommen und die Leistung nach Abschluß des Anfahrvorganges durch Schließen der Überbrückungskupplung 3 im wesentlichen ohne Verluste auf den Abtrieb 10 und damit beim Einsatz an Fahrzeugen auf die Räder übertragen wird. Insbesondere wird dabei auch die Möglichkeit der nahezu verschleißfreien Leistungsübertragung im Bereich hohen Kupplungsschlupfes über einen sehr langen Zeitraum verwiesen.

Die Anfahreinheit 30 umfasst des weiteren erfindungsgemäß eine Bremseinrichtung 11, weiche vorzugsweise als hydrodynamischer Retarder ausgeführt ist, um die Vorteile der hydrodynamischen Leistungsübertragung auch für den Bremsvorgang nutzen zu können. Der hydrodynamische Retarder 11 umfasst dazu einen Rotor 12 und einen Stator 13. Die Anwendung des Rotors 12 und damit die Wirkung des hydrodynamischen Retarders 11 erfolgt entsprechend Figur 1 an den Antrieb 9. Zu diesem Zweck kann der Rotor 12 des hydrodynamischen Retarders 11 beispielsweise direkt mit dem Pumpenrad 4 der Turbokupplung 2 koppelbar sein oder direkt auf den Antrieb 9 beziehungsweise auf die Verbindung 14 des Antriebes 9 mit dem Pumpenrad 4 der Turbokupplung 2 und damit der Antriebsseite E des Anfahrelementes 1 einwirken. Der hydrodynamische Retarder 11 ist somit rein funktional betrachtet vor der Turbokupplung beziehungsweise der Überbrückungskupplung angeordnet, räumlich jedoch in Einbaulage des Anfahrelementes bei Leistungsübertragung im Traktionsbetrieb von Antrieb 9 zum Abtrieb 10 hinter der Überbrückungskupplung und der Turbokupplung 2 angeordnet. Die beiden hydrodynamischen Komponenten - Turbokupplung 2 und hydrodynamischer Retarder 11 - sind räumlich eng beieinander angeordnet. Dies bietet den Vorteil, dass die Versorgungsleitung für die hydrodynamischen Komponenten Turbokupplung 2 und hydrodynamischer Retarder 11 möglichst kurz gehalten werden können und zusätzlich beiden Komponenten ein gemeinsames Betriebsmittelversorgungssystem zugeordnet werden kann. Das Betriebsmittelversorgungssystem ist hier mit 15 bezeichnet. Dieses umfasst Mittel zur Förderung des Betriebsmittels, beispielsweise eine Pumpeinrichtung 16 in Form einer Zahnradpumpe sowie Mittel zur Beeinflussung des Betriebsmittelumlaufes, beispielsweise in Form eines hier lediglich angedeuteten Steuer- und/oder Regelsystems 25, umfassend wenigstens eine Steuereinrichtung 26 und eine Stelleinrichtung 27 zur Beeinflussung der Betriebsmittelversorgung der Turbokupplung 2. Bei einem gemeinsam genutzten Betriebsmittelversorgungssystem werden auch die Mittel zur Kühlung des Betriebsmittels 18, welche beispielsweise in Form von Kühleinrichtungen oder von Wärmeaustauschern ausgeführt sind, von beiden Komponenten gemeinsam genutzt. Das Betriebsmittelversorgungssystem kann dabei als offener Kreislauf oder geschlossener Kreislauf ausgeführt sein. Im dargestellten Fall handelt es sich beim Betriebsmittelversorgungssystem um einen offenen Kreislauf, wobei als Betriebsmittelversorgungsquelle beispielsweise ein Tank im Gehäuse der Turbokupplung 2 vorgesehen werden kann. Die Darstellung des Betriebsmittelversorgungssystems erfolgt in der Figur zu Erläuterungszwecken lediglich rein schematisch hinsichtlich der Funktionsweise.

Die Turbokupplung 2, die Überbrückungskupplung 3 sowie der hydrodynamische Retarder 11 bilden erfindungsgemäß eine modulare Baueinheit in Form der Anfahreinheit 30, welche vormontierbar und als eigenständige Baueinheit anbietbar und handelbar ist. Dies ist beispielsweise als Modul in einem Getriebe integrierbar. Die Integration kann dabei durch Aufstecken, Anflanschen oder eine andere Art der Verbindung realisiert werden. Zusätzlich im Modul integriert ist eine Einrichtung zur Schwingungsdämpfung in Form eines Torsionsschwingungsdämpfers 17, die im dargestellten Fall funktional im Abtrieb 10 zugeordnet ist. Zu diesem Zweck ist der Torsionsschwingungsdämpfer 17 auf einer drehfest mit dem Abtrieb 10 verbundenen Welle angeordnet, wobei sowohl bei Leistungsübertragung über die Überbrückungskupplung 3 als auch über die Turbokupplung 2 der Torsionsschwingungsdämpfer 17 hinter diesen Komponenten wirksam wird. Rein räumlich in Einbaulage betrachtet ist der Torsionsschwingungsdämpfer 17 zwischen der Überbrückungskupplung 3 und der Turbokupplung 2 angeordnet. Die Integration des Torsionsschwingungsdämpfers 17 in einer modularen Baueinheit mit der Turbokupplung 2, der Überbrückungskupplung 3 sowie dem hydrodynamischen Retarder 11 ermöglicht die Schaffung einer kombinierten Anfahr- und Bremseinheit, welche als vormontierte Einheit in einem Getriebe integrierbar ist.

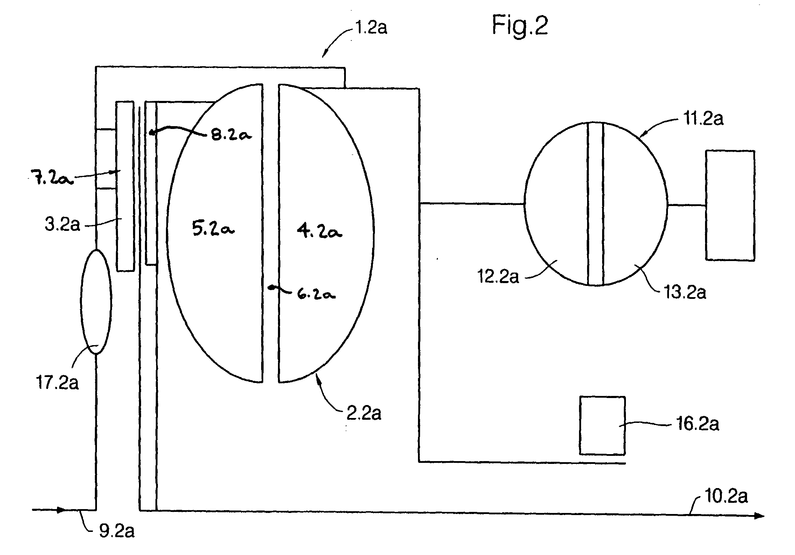

Figur 2 verdeutlicht in schematisch vereinfachter Darstellung eine weitere Ausführung einer erfindungsgemäß gestalteten Anfahreinheit 30. Gemäß Figur 2a umfasst dieses ebenfalls eine Turbokupplung 2.2a, eine Überbruckungskupplung 3.2a, eine Bremseinrichtung 11.2a in Form eines hydrodynamischen Retarders und einen Torsionsschwingungsdämpfer 17.2a. Der Grundaufbau bezüglich der Anordnung von Überbrückungskupplung 3.2a, Turbokupplung 2.2a und hydrodynamischem Retarder 11.2a zueinander entspricht im wesentlichen dem in der Figur 1 beschriebenen, weshalb für gleiche Elemente die gleichen Bezugszeichen verwendet werden. Der Torsionsschwingungsdämpfer 17.2a ist hier jedoch auf der Antriebsseite 9.2a des Anfahrelementes vor den Eingängen der Übertragungskupplung 3.2a beziehungsweise der Turbokupplung 2.2a angeordnet. Der Torsionsschwingungsdämpfer 17.2a ist im dargestellten Fall mit der Kupplungseingangsscheibe 8.2a drehfest verbunden. Räumlich erfolgt die Anordnung des Torsionsschwingungsdämpfers 17.2a in Einbaulage des Anfahrelementes 1.2a in Kraftflußrichtung im Traktionsbetrieb betrachtet vor der Überbrückungskupplung 3.2a und der Turbokupplung 2.2a. Die einzelnen Komponenten Turbokupplung 2.2a, Überbrückungskupplung 3.2a, hydrodynamischer Retarder 11.2a und Torsionsschwingungsdämpfer 17.2a sind jedoch in unmittelbarer räumlicher Nähe zueinander angeordnet.

Die Ausführungen der Anfahreinheiten 30 gemäß den Figuren 1 und 2a beinhalten einen primärseitig angeordneten Retarder 11 beziehungsweise 11.2a, dessen Rotor 12 beziehungsweise 12.2a mit dem Pumpenrad 4 beziehungsweise 4.2a und damit direkt mit der Kopplung mit der Antriebsmaschine verbunden ist. Damit werden eine verschleißfreie Abbremsung beim Einsatz in Fahrzeugen ermöglicht und die gesetzlichen Anforderungen an die dritte unabhängige Bremse erfüllt. Entscheidend für diese Anbindung ist, dass bei Rück- und Hochschaltungen in einem, dem Anfahrelement 1 beziehungsweise 1.2a nachgeordneten Getriebesatz keine zusätzlichen Schleppmomente durch den Retarder verursacht werden. Der Retarder 11 beziehungsweise 11.2a wird im Fall einer Rückschaltung bezüglich seiner Bremswirkung abgeschaltet und nach erfolgter Rückschaltung mittels der mechanischen Überbrückungskupplung wieder zugeschaltet. Die Steuerung des Bremsmomentes selbst erfolgt durch Steuerung des Füllungszustandes.

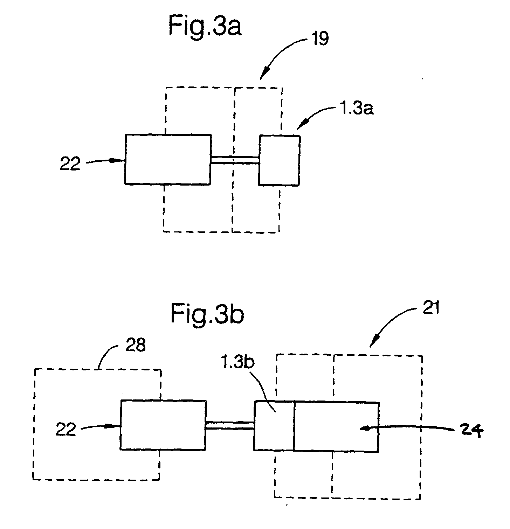

Die Figuren 3a und 3b verdeutlichen in schematisch vereinfachter Darstellung die Möglichkeit der Nutzung eines gemeinsamen Betriebsmittelversorgungssystems durch das erfindungsgemäße Anfahrelement und die Anschlußelemente. Die Figur 3a verdeutlicht dabei die Nutzung eines gemeinsamen Betriebsmittelversorgungssystems 19, welches vom Anfahrelement 1.3a und der mit diesem koppelbaren Antriebsmaschine 22 genutzt wird. Das Betriebsmittelversorgungssystem 19 kann dabei bauteilmäßig entweder der Antriebsmaschine 22 oder dem Anfahrelement 1.3a zugeordnet oder als separate Baueinheit mit den entsprechenden Anschlüssen von Antriebsmaschine 22 oder Anfahrelement 1.3a gekoppelt werden.

Die Figur 3b verdeutlicht dem gegenüber die Zuordnung eines gemeinsamen Betriebsmittelversorgungssystems 21 zum Anfahrelement 1.3b und einer Getriebebaueinheit 24. Der Antriebsmaschine 22 ist ein eigenes Betriebsmittelversorgungssystem 28 zugeordnet.

### Bezugszeichenliste:

- 1, 1.2a 1.3a, 1.3b: Anfahrelement
- 2, 2.2a: Turbokupplung
- 3, 3.2a: Überbrückungskupplung
- 4, 4.2a: Pumpenrad
- 5, 5.2a: Turbinenrad
- 6, 6.2a: torusförmiger Arbeitsraum
- 7, 7.2a: Kupplungseingangsscheibe
- 8, 8.2a: Kupplungsausgangsscheibe
- 9, 9.2a: Antrieb
- 10, 10.2a: Abtrieb
- 11, 11.2a: Bremseinrichtung, hydrodynamischer Retarder
- 12, 12.2a: Rotor
- 13, 13.2a: Stator
- 14: Verbindung zwischen Antrieb und Pumpenrad der Turbokupplung
- 15: Betriebsmittelversorgungssystem
- 16, 16.2a: Betriebsmittelfördereinrichtung
- 17, 17.2a: Torsionsschwingungsdämpfer
- 18: Mittel zur Kühlung
- 19: Betriebsmittelversorgungssystem
- 20: Mittel zur Beeinflussung der Betriebsmittelversorgung
- 21: Ventileinrichtung
- 22: Antriebsmaschine
- 23: Betriebsmittelversorgungssystem
- 24: Getriebebaueinheit
- 25: Steuer-und/oder Regelsystem
- 26: Steuereinrichtung
- 27: Stelleinrichtung Turbokupplung
- 28: Betriebsmittelversorgungssystem
- 30: Anfahreinheit

## Patentansprüche

1. Anfahreinheit (30) mit einem Anfahrelement (1, 1.2a, 1.3a, 1.3b) für den Einsatz in Schaltgetrieben, insbesondere automatisierten Schaltgetrieben, in Antriebssystemen von Fahrzeugen,
1.1 das Anfahrelement weist eine An- und eine Abtriebsseite (E,A) auf;
1.2 das Anfahrelement ist als Turbokupplung (2, 22a), umfassend ein Pumpenrad (4, 4.2a) und ein Turbinenrad (5, 5.2a) ausgeführt;
1.3 mit einer Überbrückungskupplung (3., 3.2a);
1.4 die Überbrückungskupplung (3, 3.2a) und die Turbokupplung (2, 2.2a) sind parallel geschaltet;
1.5 mit einer dem Anfahrelement zugeordneten separaten Bremseinrichtung (11, 11.2a), **gekennzeichnet durch** die folgenden Merkmale:
1.6 die Bremseinrichtung (11, 11.2a) ist drehfest mit der Antriebseite (E) der Turbokupplung (2. 2.2a) verbindbar.

2. Anfahreinheit (30) nach Anspruch 1, **dadurch gekennzeichnet, dass** die Abtriebsseiten von Überbrückungskupplung (3, 3.2a) und Turbokupplung (2, 2.2a) drehfest verbunden sind.

3. Anfahreinheit (30) nach Anspruch 1 oder 2, **dadurch gekennzeichnet, dass** die Bremseinrichtung als hydrodynamischer Retarder (11, 11.2a) ausgeführt ist.

4. Anfahreinheit (30) nach einem der Ansprüche 1 bis 3, **dadurch gekennzeichnet, dass** der Überbrückungskupplung (3, 3.2a ) und der Turbokupplung (2, 2.2a) ein gemeinsam nutzbares Betriebsmittelversorgungssystem (15, 19, 21, 28) zugeordnet ist.

5. Anfahreinheit (30) nach einem der Ansprüche 3 oder 4, **dadurch gekennzeichnet, dass** der Überbrückungskupplung (3, 3.2a ), der Turbokupplung (2, 2.2.a) und, dem hydrodynamischen Retarder (11, 11.2a) das gemeinsam nutzbare Betriebsmittelversorgungssystem (15, 19, 21, 28) zugeordnet ist

6. Anfahreinheit (30) nach Anspruch 4 oder 5, **dadurch gekennzeichnet, dass** das Betriebsmittelverorgungssystem (15, 19, 21, 28) als autarke Einheit ausgeführt ist

7. Anfahreinheit (30) nach Anspruch 4 oder 5, **dadurch gekennzeichnet, dass** das Betriebmittelversorgungssystem (15, 19, 21) mit dem Betriebsmittelversorgungssystem (22) der mit der Anfahreinheit (30) koppelbaren Antriebsmaschine und/oder des mit der Anfahreinheit koppelbaren Getriebes (24) kombiniert ist.

8. Anfahreinheit (30) nach einem der Ansprüche 1 bis 7, **dadurch gekennzeichnet, dass** die Überbrückungskupplung (3, 3.2a ), die Turbokupplung (2, 2.2.a) und der hydrodynamische Retarder (11, 11.2a) in einer öldichten Kammer zur Aufnahme der notwendigen Ölmenge angeordnet sind.

9. Anfahreinheit (30) nach Anspruch 8, **dadurch gekennzeichnet, dass** die öldichte Kammer in wenigstens zwei Teilkammem unterteilt ist, welche mit einem unterschiedlichen Druckniveau beaufschlagbar, aber leitend miteinander verbindbar sind.

10. Anfahreinheit (30) nach einem der Ansprüche 1 bis 9, **dadurch gekennzeichnet, dass** der Überbrückungskupplung (3, 3.2a ), der Turbokupplung (2, 2.2.a) und dem hydrodynamische Retarder (11, 11.2a) eine gemeinsam nutzbare Kühleinrichtung (18) zugeordnet ist.

11. Anfahreinheit (30) nach einem der Ansprüche 1 bis 10, **dadurch gekennzeichnet, dass** der Überbrückungskupplung (3, 3.2a ), der Turbokupplung (2, 2.2.a) und dem hydrodynamischen Retarder (11, 11.2a ) eine gemeinsam nutzbare Steuer- und/oder Regelvorrichtung (26) zugeordnet ist

12. Anfahreinheit (30) nach einem der Ansprüche 1 bis 11, **dadurch gekennzeichnet, dass** der Überbrückungskupplung (3, 3.2a ), der Turbokupplung (2, 2.2.a) und dem hydrodynamische Retarder (11, 11.2a) und der mit der Anfahreinheit (30) koppelbaren Antriebsmaschine (22) und/oder der mit dieser koppelbaren Getriebebaueinheit (24) eine gemeinsame Steuer-/Regelvorrichtung (26) zugeordnet ist

13. Anfahreinheit (30) nach einem der Ansprüche 1 bis 12, **dadurch gekennzeichnet, dass** der Turbokupplung (2, 2.2.a) und dem hydrodynamische Retarder (11, 11.2a) eine Betriebsmittelfördereinrichtung in Form einer Pumpe (16) zugeordnet ist.

14. Anfahreinheit (30) nach einem der Ansprüche 1 bis 13, **dadurch gekennzeichnet, dass** diese als vormontierte Baugruppe ausgeführt ist.

15. Anfahreinheit (30) nach einem der Ansprüche 1 bis 14, **dadurch gekennzeichnet, dass** die Bremseinrichtung drehfest mit dem Pumpenrad (4) gekoppelt ist.

16. Automatisiertes Schaltgetriebe mit einer Anfahreinheit (30) gemäß einem der Ansprüche 1 bis 15.

## Claims

1. A starting unit (30) with a starting element (1, 1.2a, 1.3a, 1.3b) for use in change-speed gears, especially automated change-speed gears in driving systems of vehicles,
1.1 with the starting element comprising a driving and a driven side (E, A);
1.2 with the starting element being configured as a turbo coupling (2, 2.2a) comprising a pump wheel (4, 4.2a) and a turbine wheel (5, 5.2a);
1.3 with a lock-up clutch (3, 3.2a);
1.4 with the lock-up clutch (3, 3.2a) and the turbo coupling (2, 2.2a) being switched in parallel,
1.5 with a separate braking device (11, 11.2a) associated with the starting element, **characterized by** the following features:
1.6 the braking device (11, 11.2a) can be connected in a torsionally rigid manner with the driven side (E) of the turbo coupling (2, 2.2a).

2. A starting unit (30) according to claim 1, **characterized in that** the driven sides of the lock-up clutch (3, 3.2a) and the turbo coupling (2, 2.2a) are connected in a torsionally rigid fashion.

3. A starting unit (30) according to claim 1 or 2, **characterized in that** the braking device is configured as a hydrodynamic retarder (11, 11.2a).

4. A starting unit (30) according to one of the claims 1 to 3, **characterized in that** the lock-up clutch (3, 3.2a) and the turbo coupling (2, 2.2a) are associated with a commonly useable supply system (15, 19, 21, 28) for operating material.

5. A starting unit (30) according to one of the claims 3 or 4, **characterized in that** the commonly used supply system (15, 19, 21, 28) for the operating material is associated with the lock-up clutch (3, 3.2a), the turbo coupling (2, 2.2a) and the hydrodynamic retarder (11, 11.2a).

6. A starting unit (30) according to claim 4 or 5, **characterized in that** the supply system (15, 19, 21, 28) for the operating material is configured as an autonomous unit.

7. A starting unit (30) according to claim 4 or 5, **characterized in that** the supply system (15, 19, 21 ) for the operating material is combined with the supply system (22) for the operating material of the drive motor which can be coupled with the starting unit (30) and/or of the transmission (24) which can be coupled with the starting unit.

8. A starting unit (30) according to one of the claims 1 to 7, **characterized in that** the lock-up clutch (3, 3.2a), the turbo coupling (2, 2.2a) and the hydrodynamic retarder (11, 11.2a) are arranged in an oil-tight chamber for receiving the necessary oil quantity.

9. A starting unit (30) according to claim 8, **characterized in that** the oil-tight chamber can be subdivided into at least two partial chambers which can be pressurized with a different pressure level but which can be connected with each other in a conductive manner.

10. A starting unit (30) according to one of the claims 1 to 9, **characterized in that** the lock-up clutch (3, 3.2a), the turbo coupling (2, 2.2a) and the hydrodynamic retarder (11, 11.2a) are associated with a jointly useable cooling device (18).

11. A starting unit (30) according to one of the claims 1 to 10, **characterized in that** the lock-up clutch (3, 3.2a), the turbo coupling (2, 2.2a) and the hydrodynamic retarder (11, 11.2a) are associated with a jointly useable open-loop and/or closed-loop control apparatus (26).

12. A starting unit (30) according to one of the claims 1 to 11, **characterized in that** a common open-loop/closed-loop control apparatus (26) is associated with the lock-up clutch (3, 3.2a), the turbo coupling (2, 2.2a) and the hydrodynamic retarder (11, 11.2a) and the drive motor (22) which can be coupled with the starting unit (30) and/or the transmission module (24) which can be coupled with the same.

13. A starting unit (30) according to one of the claims 1 to 12, **characterized in that** a conveying device for the operating material in form of a pump (16) is associated with the turbo coupling (2, 2.2a) and the hydrodynamic retarder (11, 11.2a).

14. A starting unit (30) according to one of the claims 1 to 13, **characterized in that** the same is configured as a pre-mounted module.

15. A starting unit (30) according to one of the claims 1 to 14, **characterized in that** the braking device is torsionally rigidly connected to the pump wheel (4).

16. An automated change-speed gear with a starting unit (30) according to one of the claims 1 to 15.

## Revendications

1. Unité de démarrage (30) avec un élément de démarrage (1, 1.2a, 1.3a, 1.3b) destinée à être utilisée dans des boîtes de vitesses, notamment dans des boîtes de vitesses automatisées, de systèmes d'entraînement de véhicules,
1.1. l'élément de démarrage comporte un côté menant et un côté mené (E, A) ;
1.2 l'élément de démarrage est réalisé sous forme de turbocoupleur (2, 2.2a) comprenant une roue primaire (4, 4.2a) et une roue secondaire (5, 5.2a) ;
1.3 avec un embrayage de pontage (3, 3.2a) ;
1.4 l'embrayage de pontage (3, 3.2a) et le turbocoupleur (2, 2.2a) sont associés en parallèle ;
1.5 avec un dispositif de freinage (11, 11.2a) séparé, affecté à l'élément de démarrage,
**caractérisé par** les particularités suivantes :
1.6 le dispositif de freinage (11, 11.2a) est apte à être solidarisé en rotation avec le côté menant (E) du turbocoupleur (2, 2.2a).

2. Unité de démarrage (30) selon la revendication 1, **caractérisée en ce que** les côtés menés de l'embrayage de pontage (3, 3.2a) et du turbocoupleur (2, 2.2a) sont solidarisés en rotation l'un avec l'autre.

3. Unité de démarrage (30) selon la revendication 1 ou 2, **caractérisée en ce que** le dispositif de freinage est réalisé sous forme de ralentisseur hydrodynamique (11, 11.2a).

4. Unité de démarrage (30) selon l'une quelconque des revendications 1 à 3, **caractérisée en ce qu'**un système d'alimentation en fluide de travail (15, 19, 21, 28) est destiné à être utilisé aussi bien par l'embrayage de pontage (3, 3.2a) que par le turbocoupleur (2, 2.2a) auxquels il est affecté.

5. Unité de démarrage (30) selon l'une quelconque des revendications 3 ou 4, **caractérisée en ce que** le système d'alimentation en fluide de travail (15, 19, 21, 28) est destiné à être utilisé aussi bien par l'embrayage de pontage (3, 3.2a) que par le turbocoupleur (2, 2.2a) ainsi que par le ralentisseur hydrodynamique (11, 11.2a) auxquels il est affecté.

6. Unité de démarrage (30) selon la revendication 4 ou 5, **caractérisée en ce que** le système d'alimentation en fluide de travail (15, 19, 21, 28) est réalisé sous forme d'unité autonome.

7. Unité de démarrage (30) selon la revendication 4 ou 5, **caractérisée en ce que** le système d'alimentation en fluide de travail (15, 19, 21) est combiné au système d'alimentation en fluide de travail (22) de la machine d'entraînement apte à être couplée à l'unité de démarrage (30) et/ou du mécanisme (24) de changement de vitesses apte à être couplé à l'unité de démarrage.

8. Unité de démarrage (30) selon l'une quelconque des revendications 1 à 7, **caractérisée en ce que** l'embrayage de pontage (3, 3.2a), le turbocoupleur (2, 2.2a) et le ralentisseur hydrodynamique (11, 11.2a) sont disposés dans une chambre étanche à l'huile destinée à recevoir la quantité d'huile nécessaire.

9. Unité de démarrage (30) selon la revendication 8, **caractérisée en ce que** la chambre étanche à l'huile est divisée en au moins deux parties de chambre destinées à être mises en pression à des niveaux de pression différents tout en étant aptes à communiquer entre elles.

10. Unité de démarrage (30) selon l'une quelconque des revendications 1 à 9, **caractérisée en ce qu'**un dispositif de refroidissement (18) est destiné à être utilisé aussi bien par l'embrayage de pontage (3, 3.2a) que par le turbocoupleur (2, 2.2a) ainsi que par le ralentisseur hydrodynamique (11, 11.2a) auxquels il est affecté.

11. Unité de démarrage (30) selon l'une quelconque des revendications 1 à 10, **caractérisée en ce qu'**un dispositif de commande et/ou de régulation (26) est destiné à être utilisé aussi bien par l'embrayage de pontage (3, 3.2a) que par le turbocoupleur (2, 2.2a) ainsi que par le ralentisseur hydrodynamique (11, 11.2a) auxquels il est affecté.

12. Unité de démarrage (30) selon l'une quelconque des revendications 1 à 11, **caractérisée en ce qu'**un dispositif de commande / de régulation (26) commun est affecté à l'embrayage de pontage (3, 3.2a), au turbocoupleur (2, 2.2a) et au ralentisseur hydrodynamique (11, 11.2a) ainsi qu'à la machine d'entraînement (22) apte à être couplée à l'unité de démarrage (30) et/ou à l'ensemble des organes du mécanisme (24) de changement de vitesses apte à être couplé avec celle-ci.

13. Unité de démarrage (30) selon l'une quelconque des revendications 1 à 12, **caractérisée en ce qu'**un dispositif destiné à véhiculer le fluide de travail est affecté sous forme de pompe (16) au turbocoupleur (2, 2.2a) et au ralentisseur hydrodynamique (11, 11.2a).

14. Unité de démarrage (30) selon l'une quelconque des revendications 1 à 13, **caractérisée en ce que** celle-ci est réalisée sous forme de sous-ensemble préassemblé.

15. Unité de démarrage (30) selon l'une quelconque des revendications 1 à 14, **caractérisée en ce que** le dispositif de freinage est solidarisé en rotation de la roue primaire (4).

16. Boîte de vitesses automatisée avec une unité de démarrage (30) selon l'une quelconque des revendications 1 à 15.
